# EUROPEAN PATENT SPECIFICATION

(11) **EP 4 363 518 B1**
(45) Date of publication and mention of the grant of the patent: **14.10.2026**
(21) Application number: 22738446.8
(22) Date of filing: 28.06.2022
(51) Int. Cl.: C09K 5/10, H01M 8/04029, H01M 10/6567

(54) **HEAT-TRANSFER FLUID WITH LOW ELECTRICAL CONDUCTIVITY COMPRISING A VINYL PYRROLIDONE POLYMER, METHODS FOR ITS PREPARATION AND USES THEREOF**
WÄRMEÜBERTRAGUNGSFLÜSSIGKEIT MIT NIEDRIGER ELEKTRISCHER LEITFÄHIGKEIT MIT EINEM VINYLPYRROLIDONPOLYMER, VERFAHREN ZU IHRER HERSTELLUNG UND IHRE VERWENDUNGEN
FLUIDE DE TRANSFERT DE CHALEUR À FAIBLE CONDUCTIVITÉ ÉLECTRIQUE COMPRENANT UN POLYMÈRE DE VINYLE PYRROLIDONE, SES PROCÉDÉS DE PRÉPARATION ET D'UTILISATION

(30) Priority: 29.06.2021 EP 21182326
(43) Date of publication of application: 08.05.2024
(73) Proprietor: Arteco NV, 2900 Schoten (BE)
(72) Inventor: CLERICK, Sander, 9051 Gent (BE); LIEVENS, Serge, 9051 Gent (BE)
(74) Representative: Ipsilon Belgium
(86) International application number: PCT/EP2022/067672
(87) International publication number: WO 2023/275016

(56) References cited:
- EP-B1- 1 739 775
- CN-A- 109 652 809
- US-A- 6 080 331
- US-A1- 2002 030 177
- US-A1- 2003 164 470
- US-A1- 2004 029 754
- US-A1- 2005 109 979
- US-A1- 2013 108 959

## Description

### Field of the invention

The present invention relates to heat-transfer fluids with low electrical conductivity which comprise an N-vinylpyrrolidone polymer and are useful for diverse applications, for example in fuel cells. The invention further relates to methods for the preparation of said heat-transfer fluids, and to the methods and uses employing said heat-transfer fluids.

### Background art

Heat-transfer fluids are widely employed in heat exchange systems associated with internal combustion engines, solar systems, fuel cells, electrical motors, generators, electronic equipment, battery equipment, and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. The additives present in heat-transfer fluids may be employed to obtain a variety of functionalities, such as (further) lowering of the freezing point, improving the heat-exchange properties, inhibiting corrosion, et cetera. Since heat-transfer fluids are in continuous contact with metal parts (aluminum alloys, cast iron, steel, copper, brass, solder, et cetera.) they nearly always contain one or more corrosion inhibitors.

Fuel cells are electrochemical cells in which the chemical energy stored is converted to electrical energy by controlled oxidation of the fuel. The relatively low output of pollutants compared to combustion engines makes fuel cells attractive alternatives in applications such as automobiles and power plants. In most applications, several electrochemical cells are stacked together in series into a so-called fuel cell stack, allowing higher voltages to be generated. Heat generated by the fuel cell stack can be removed by flowing coolant through channels formed by the bipolar plates.

The potential difference between the positive and negative ends of the fuel cell stack may cause a shunt current to flow through the coolant, thus reducing the voltage of the fuel cell. In addition to the deleterious loss of voltage, shunt currents cause additional problems, such as corrosion of the separator plate near the positive end of a fuel cell stack. Hence, coolants for use in electrical applications such as fuel cells need to have low electrical conductivity (i.e. high electrical resistance) and be capable of maintaining this through the lifetime of the coolant.

Most known heat-transfer fluids (e.g. coolants) have been specifically designed for internal combustion engines and are not suitable for use in electrical applications, such as fuel cells, batteries or power electronics, because they (i) possess high electrical conductivity, or (ii) become significantly more electrically conductive upon aging, especially at increased temperatures. The increase in electrical conductivity upon aging is generally attributed to the formation of ionic compounds due to degradation of alcohols, particularly glycols, which are often used as a base fluid, due to degradation of additives, due to metal corrosion and/or due to impurities in the cooling circuit.

Hence, in recent years there has been an increased interest in developing heat-transfer fluids which are suitable for use in electrical applications, such as fuel cells.

US 2005/0109979 A1 describes a heat-transfer fluid for electric vehicles comprising a base agent and an anti-corrosive additive being an amide compound, an imide compound or an azole compound which suppresses oxidation of the base agent or blocks ions from eluting into the cooling system, preventing increases in the electrical conductivity of the coolant.

EP 1739775 B1 describes a heat-transfer fluid comprising a base agent and an anticorrosive additive which is a sugar alcohol and inhibits oxidation of the base agent and prevents increase of the electric conductivity.
CN109652809A describes a mixed corrosion inhibitor for an ethylene glycol-water cooling solution. The inhibitor comprises ethanolamine phosphate, an organic azole compound formed from benzothiazole and mercapto in a 1:1 mass ratio, polyvinyl pyrrolidone, sodium borate, and cerium nitrate. This organic-inorganic composite cathode-anode corrosion inhibitor protects multi-metal components, such as copper, aluminum alloy, carbon steel, and stainless steel, in electronic liquid cooling systems from corrosion.
US 2003/164470 A1 describes antifreeze concentrates based on alkylene glycols, their derivatives, or glycerin, containing 0.05 -10 wt.% of one or more carboxylic acid amides and/or sulfonic acid amides. The invention further relates to ready-to-use aqueous coolant compositions incorporating these concentrates and their use in cooling systems for magnesium- and/or aluminum-containing internal combustion engines.

The known heat-transfer fluids which are capable of maintaining low electrical conductivity have several disadvantages. They rely for example on the presence of additives which may be expensive, toxic or have other undesirable properties. Furthermore, since the additives employed in the art to maintain low electrical conductivity are often consumed in the process, large amounts of additive are required for practical use, which may also affect other properties of the heat-transfer fluid in an undesirable way.

Alcohol-based, such as glycol-based, heat transfer fluids have several advantages. For example, they possess a low freezing point combined with a low viscosity and high flash point, and the safety profile of different glycols has been extensively studied.

The present inventors have found that it would be particularly desirable to provide an alcohol-based, particularly a glycol-based, heat transfer fluid capable of maintaining low electrical conductivity upon ageing in the presence of aluminium. In view of their light weight, aluminium based materials are often preferred for parts such as cooling plates and heat exchangers.

It is an object of the present invention to provide improved heat-transfer fluids, preferably alcohol based, which are suitable for use as a coolant in electrical systems, such as fuel cells, batteries or power electronics.

Hence, it is an object of the present invention to provide heat-transfer fluids, preferably alcohol based, which have low electrical conductivity and which are capable of maintaining low electrical conductivity upon aging, such as upon ageing at increased temperatures.

It is a further object of the present invention to provide heat-transfer fluids, preferably alcohol based, which are capable of maintaining comparable low electrical conductivity upon aging, such as upon aging at increased temperatures while requiring less additives than known heat-transfer fluids.

It is a further object of the present invention to provide heat-transfer fluids, glycol based, possessing extended service life compared to known heat-transfer fluids.

### Summary of the invention

The present inventors have found that one or more of these objectives can be met by employing a coolant composition comprising a base fluid and an N-vinylpyrrolidone polymer, wherein the N-vinylpyrrolidone polymer is selected from polyvinylpyrrolidone homopolymers and polyvinylpyrrolidone copolymers, and wherein the composition has an electrical conductivity at 25 °C of less than 100 µS/cm.

As will be shown in the appended examples, it was surprisingly found that N-vinylpyrrolidone polymers maintain low electrical conductivity upon aging at increased temperatures. Furthermore, it was surprisingly found that the coolant compositions in accordance with the invention are capable of maintaining this low electrical conductivity upon aging at increased temperatures in the presence of aluminum substrates, using the test procedure as described in the experimental section.

It will be understood by the skilled person based on the present disclosure that the coolant compositions in accordance with the present invention effectively allow for the provision of heat transfer fluids or coolants suitable for use in electrical applications which require less additives (especially antioxidants) and/or which are capable of maintaining low electrical conductivity upon aging for longer periods of time than comparable coolant compositions known in the art. Without wishing to be bound by any theory, the present inventors believe that the electrical conductivity of the aged samples can be correlated to the amount of alcohol-related, particularly glycol-related, oxidation products, glycolate and formate present in the mixture, as can be seen from the experimental results. It is believed that the N-vinylpyrrolidone polymers interact with the metal surface to form a (weakly bound) film that is somehow effective in separating the metal ions from the heat transfer fluid and the metal substrate.

Polyvinylpyrrolidone is known as a hard water stability agent in antifreeze concentrates for internal combustion engines (see for example US 2008/0001118 A1). However, the use of an *N-*vinylpyrrolidone polymer to maintain the low electrical conductivity in coolant compositions was not yet known in the art.

Hence, in a first aspect the invention provides a coolant composition comprising a base fluid and an N-vinylpyrrolidone polymer, preferably polyvinylpyrrolidone, wherein the composition has an electrical conductivity at 25 °C of less than 100 µS/cm, wherein the base fluid consists of water and alcohol, wherein the alcohol is present in an amount in the range of 10-99.5 wt.% by weight of the base fluid, wherein the composition comprises more than 75 wt.% base fluid by total weight of the composition, and wherein the amount of inorganic compounds is less than 100 ppm by total weight of the composition. As will be shown herein, these coolant compositions are capable of maintaining low electrical conductivity, such as upon aging at increased temperatures in the presence of aluminum substrates (EN AC-AlSi10Mg(a)T6, DIN EN 1706) using the test procedure as described in the experimental section.

It should be understood that the present invention is defined by the scope of the claims. The various embodiments, examples, and preferred features described throughout this description are provided to illustrate different aspects and implementations of the invention, but do not limit the scope of protection, which is determined solely by the claims.
In preferred embodiments, the coolant compositions of the invention are provided in the form of ready-to-use compositions described herein.

In another aspect the invention provides corresponding uses of an N-vinylpyrrolidone polymer.

### Detailed description

A first aspect of the invention concerns coolant compositions comprising a base fluid and an N-vinylpyrrolidone polymer, selected from polyvinylpyrrolidone homopolymers and polyvinylpyrrolidone copolymers, wherein the composition has an electrical conductivity at 25 °C of less than 100 µS/cm, wherein the base fluid consists of water and alcohol, wherein the alcohol is present in an amount in the range of 10-99.5 wt.% by weight of the base fluid, wherein the composition comprises more than 75 wt.% base fluid by total weight of the composition, and wherein the amount of inorganic compounds is less than 100 ppm by total weight of the composition.

The coolant compositions preferably have an electrical conductivity at 25 °C of less than 50 µS/cm, more preferably less than 25 µS/cm, even more preferably less than 10 µS/cm, yet more preferably less than 5 µS/cm.

### Base fluid

In accordance with the invention the base fluid consists of water and alcohol. In preferred embodiments the alcohol is selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, more preferably selected from the group consisting of monoethylene glycol, monopropylene glycol, 1,3-propanediol, glycerol and mixtures thereof.

As used herein, "monoethylene glycol" should be interpreted to mean "ethane-1,2-diol", and is interchangeably referred to as "MEG".

As used herein, "monopropylene glycol" should be interpreted to mean "propane-1,2-diol", and is interchangeably referred to as "MPG".

As used herein, the term "glycerol" means "propane-1,2,3-triol" and is synonymous with glycerin. In preferred embodiments of the invention the base fluid consists of water, monoethylene glycol, monopropylene glycol, 1,3-propanediol, glycerol or mixtures thereof.

The base fluid consists of water and alcohol, wherein the alcohol is present in an amount of 10-99.5 wt.% (by weight of the base fluid), preferably 10-80 wt.%, more preferably 30-70 wt.%. In particular embodiments the alcohol is present in an amount in the range of 33-60 wt.% (by weight of the base fluid).

In embodiments of the invention, the base fluid comprises more than 50 wt.% water (by weight of the base fluid), preferably more than 70 wt.%, more preferably more than 85 wt.%.

In embodiments of the invention, the base fluid comprises more than 50 wt.% monoethylene glycol (by weight of the base fluid), preferably more than 70 wt.%, more preferably more than 85 wt.%, most preferably more than 95 wt.% monoethylene glycol.

In embodiments of the invention, the base fluid comprises more than 50 wt.% monopropylene glycol (by weight of the base fluid), preferably more than 70 wt.%, more preferably more than 85 wt.%, most preferably more than 95 wt.% monopropylene glycol.

In embodiments of the invention, the base fluid comprises more than 50 wt.% 1,3-propane diol (by weight of the base fluid), preferably more than 70 wt.%, more preferably more than 85 wt.%, most preferably more than 95 wt.% 1,3-propane diol.

In embodiments of the invention, the base fluid comprises more than 50 wt.% glycerol (by weight of the base fluid), preferably more than 70 wt.%, more preferably more than 85 wt.%, most preferably more than 95 wt.% glycerol.

In preferred embodiments of the invention, a composition as described herein is provided, wherein the composition comprises more than 78 wt.% (by total weight of the composition) of base fluid, more preferably more than 85 wt.%, even more preferably more than 90 wt.%, still more preferably more than 95 wt.% or more than 98 wt.% of base fluid.

As will be understood by the person skilled in the art, the base fluid is normally added to the composition '*quantum satis'.* In embodiments of the invention, the composition comprises less than 99.9 wt.% base fluid (by total weight of the composition), such as less than 99.8 wt.%, less than 99.5 wt.% or less than 99 wt.%, less than 98 wt.%, less than 97 wt.%, less than 96 wt.%, less than 95 wt.%, less than 94 wt.%, less than 93 wt.%, less than 92 wt.%, less than 91 wt.%, less than 90 wt.%, less than 89 wt.%, less than 88 wt.%, less than 87 wt.%, less than 86 wt.%, less than 85 wt.%, less than 84 wt.%, less than 83 wt.%, less than 82 wt.%, or less than 81 wt.% of base fluid.

In preferred embodiments of the invention, a composition as described herein is provided, wherein the compositions comprises less than 99.9 wt.% base fluid (by total weight of the composition), or less than 99.5 wt.%, or less than 99 wt.%.

### N-vinylpyrrolidone polymer

In accordance with the invention, the compositions as described herein comprise an *N-*vinylpyrrolidone polymer, selected from polyvinylpyrrolidone homopolymer and polyvinylpyrrolidone copolymers, preferably polyvinylpyrrolidone homopolymer. Accordingly, the term N-vinylpyrrolidone polymer as used herein concerns polymers derived from monomers that comprise or consist of N-vinylpyrrolidone, also known as *N*-vinyl-2-pyrrolidone. Whenever in this document the term 'polyvinylpyrrolidone' is used, without an affix (such as homopolymer or copolymer) or further specification, polyvinylpyrrolidone homopolymer is referred to. Polyvinylpyrrolidone *(i.e.* homopolymer), abbreviated as PVP, is a water-soluble polymer synthesized through polymerisation from the monomer N-vinylpyrrolidone, wherein n defines the degree of polymerisation for the polymer (see scheme below). Polyvinylpyrrolidone is also commonly called polyvidone, povidone, poly[1-(2-oxo-1-pyrrolidinyl)ethylen], 1-ethenyl-2-pyrrolidon homopolymer or 1-vinyl-2-pyrrolidinon-polymere. The chemical formula is (C₆H₉NO)ₙ and the CAS number is 9003-39-8.

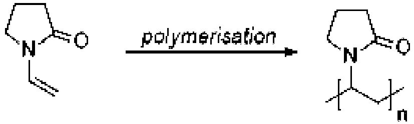

In particular preferred embodiments, the N-vinylpyrrolidone polymer is a polyvinylpyrrolidone homopolymer, which means that the polyvinylpyrrolidone is derived from one species of monomer, the monomer being N-vinylpyrrolidone. In other preferred embodiments, the N-vinylpyrrolidone polymer is a polyvinylpyrrolidone copolymer, which means that the polyvinylpyrrolidone is derived from more than one species of monomer, notably N-vinylpyrrolidone in combination with at least one other monomer. Non-limiting examples of such other monomers are styrene, vinyl acetate, ethylene, propylene, tetrafluoroethylene, methyl methacrylate, vinyl chloride and ethylene oxide.

In a preferred embodiment, the polyvinylpyrrolidone copolymer is derived from N-vinylpyrrolidone and at least one other monomer, wherein the percentage of N-vinylpyrrolidone monomers is at least 10%, more preferably at least 25%, such as at least 50%, at least 60%, at least 70%, at least 80%, at least 90%, or at least 95%, based on the total number of monomers in the polyvinylpyrrolidone copolymer. As will be understood by those skilled in the art, the minimum percentage of N-vinylpyrrolidone monomers, based on the total number of monomers in the polyvinylpyrrolidone copolymer, is amongst others determined by the solubility of the polyvinylpyrrolidone copolymer in the composition, more particularly by the solubility in the base fluid.

Preferred polyvinylpyrrolidone copolymers that can be applied in the composition according to the invention include copolymers of N-vinylpyrrolidone and vinyl acetate, wherein the percentage of N-vinylpyrrolidone monomers is at least 25%, based on the total number of monomers in the polyvinylpyrrolidone copolymer, hydrolysed forms of copolymers of N-vinylpyrrolidone and vinyl acetate, wherein the percentage of N-vinylpyrrolidone monomers is at least 10%, based on the total number of monomers in the polyvinylpyrrolidone copolymer and copolymers of N-vinylpyrrolidone and N-vinylcaprolactam, wherein the percentage of N-vinylpyrrolidone monomers is at least 40%, based on the total number of monomers in the polyvinylpyrrolidone copolymer.

In accordance with the invention it is particularly preferred that the N-vinylpyrrolidone polymer is a polyvinylpyrrolidone homopolymer.

In accordance with the invention, the N-vinylpyrrolidone polymer, preferably the polyvinylpyrrolidone, has a weight average molecular weight M_{w} in the range of 500 to 2,500,000 g/mol. As appreciated by the skilled person, the weight average molecular is the weight fraction of molecules in a polymer sample and provides the average of the molecular masses of the individual macromolecules in the polymer sample. The weight average molecular weight as defined herein is determined using the following equation: ${M}_{w} = \left(\sum {N}_{i} {M}_{i}^{2}\right) / \left(\sum {N}_{i} {M}_{i}\right)$*.* The skilled person knows the different techniques to determine the weight average molecular weight of polymers of varying chain lengths. The weight average molecular weight and the corresponding method of measurement are typically indicated on the product data sheet of the considered polymers.

In particular embodiments of the invention, the N-vinylpyrrolidone polymer, preferably the polyvinylpyrrolidone, has a weight average molecular weight in the range of 3,000 to 2,500,000 g/mol, preferably in the range of 5,000 to 2,250,000 g/mol, more preferably in the range of 7,500 to 2,00,000 g/mol, even more preferably in the range of 8,000 to 1,800,000 g/mol.

In particular embodiments of the invention, the N-vinylpyrrolidone polymer, preferably the polyvinylpyrrolidone, has a weight average molecular weight in the range of 3,000 to 700,000 g/mol, preferably in the range of 5,000 to 500,000 g/mol, more preferably in the range of 7,500 to 250,000 g/mol, even more preferably in the range of 8,000 to 100,000 g/mol. N-vinylpyrrolidone polymers, preferably the polyvinylpyrrolidone, having these weight average molecular weight ranges are preferred, because they have a lower kinetic viscosity, thereby improving the resulting charge transfer of the composition, which is beneficial for the properties of the low-electrical conductivity coolant.

In particular embodiments of the invention, the N-vinylpyrrolidone polymer, preferably the polyvinylpyrrolidone, has a weight average molecular weight in the range of 700,000 to 2,500,000 g/mol, preferably in the range of 750,000 to 2,250,000 g/mol, more preferably in the range of 850,000 to 2,000,000 g/mol, even more preferably in the range of 1,000,000 to 1,800,000 g/mol.

In a preferred embodiment, the N-vinylpyrrolidone polymer, preferably the polyvinylpyrrolidone, has a weight average molecular weight in the range of 500 to 50,000 g/mol, more preferably in the range of 1,000 to 15,000 g/mol, even more preferably in the range of 1,500 to 10,000 g/mol, such as about 2000 g/mol, about 2500 g/mol, about 5000 g/mol or about 8000 g/mol.

N-vinylpyrrolidone polymers that may be suitable used as additive can be purchased from commercial supplies such as BASF, Sigma-Aldrich or Nippon Shokubai. Examples of commercially available polyvinylpyrrolidone are Luvitec K17 (M_{W} = 9,000 g/mol), Luvitec K30 (M_{W} = 50,000 g/mol), Luvitec K90 (M_{W} = 1,400,000 g/mol) and PVP K30.

In embodiments of the invention, the N-vinylpyrrolidone polymer, preferably the polyvinylpyrrolidone, is able to maintain the electrical conductivity at 25 °C at less than 50 µS/cm, preferably less than 25 µS/cm, preferably less than 10 µS/cm, more preferably less than 5 µS/cm, most preferably less than 2 µS/cm when employed as the sole additive at a concentration within the range of 0.0001 - 1 wt.% N-vinylpyrrolidone polymer in a base fluid consisting of 30-60 wt.% MEG in water; preferably within the range of 0.00015 - 0.5 wt.% N-vinylpyrrolidone polymer; most preferably within the range of 0.0002 - 0.5 wt.% N-vinylpyrrolidone polymer, wherein the electrical conductivity is determined after aging the heat-transfer fluid at 90 °C for 14 days, such as in the presence of aluminum substrates (EN AC-AlSi10Mg(a)T6, DIN EN 1706) using the test procedure as described in the experimental section.

In particular preferred embodiments, the N-vinylpyrrolidone polymer, preferably the polyvinylpyrrolidone, having a weight average molecular weight of 500-12,000 g/mol is able to maintain the electrical conductivity at 25 °C at less than 50 µS/cm, preferably less than 25 µS/cm, preferably less than 10 µS/cm, more preferably less than 5 µS/cm, most preferably less than 2 µS/cm when employed as the sole additive at a concentration of 0.002-0.5 wt.% N-vinylpyrrolidone polymer in a base fluid consisting of 30-60 wt.% MEG in water, wherein the electrical conductivity is determined after aging the heat-transfer fluid at 90 °C for 14 days, such as in the presence of aluminum substrates (EN AC-AlSi10Mg(a)T6, DIN EN 1706) using the test procedure as described in the experimental section.

In particular preferred embodiments, the N-vinylpyrrolidone polymer, preferably the polyvinylpyrrolidone, having a weight average molecular weight of 20,000-50,000 g/mol is able to maintain the electrical conductivity at 25 °C at less than 50 µS/cm, preferably less than 25 µS/cm, preferably less than 10 µS/cm, more preferably less than 5 µS/cm, most preferably less than 2 µS/cm when employed as the sole additive at a concentration of 0.002-0.5 wt.% N-vinylpyrrolidone polymer in a base fluid consisting of 30-60 wt.% MEG in water, wherein the electrical conductivity is determined after aging the heat-transfer fluid at 90°C for 14 days, such as in the presence of aluminum substrates (EN AC-AlSi10Mg(a)T6, DIN EN 1706) using the test procedure as described in the experimental section.

In embodiments, the N-vinylpyrrolidone polymer, preferably polyvinylpyrrolidone, having a weight average molecular weight of 40,000-80,000 g/mol is able to maintain the electrical conductivity at 25 °C at less than 50 µS/cm, preferably less than 25 µS/cm, preferably less than 10 µS/cm, more preferably less than 5 µS/cm, most preferably less than 2 µS/cm when employed as the sole additive at a concentration of 0.0002-0.5 wt.% N-vinylpyrrolidone polymer in a base fluid consisting of 30-60 wt.% MEG in water, wherein the electrical conductivity is determined after aging the heat-transfer fluid at 90°C for 14 days, such as in the presence of aluminum substrates (EN AC-AlSi10Mg(a)T6, DIN EN 1706) using the test procedure as described in the experimental section.

In preferred embodiments, the N-vinylpyrrolidone polymer, preferably polyvinylpyrrolidone, having a weight average molecular weight of 500 to 50,000 g/mol, more preferably 1,000 to 15,000 g/mol, even more preferably 1,500 to 10,000 g/mol is able to maintain the electrical conductivity at 25 °C at less than 50 µS/cm, preferably less than 25 µS/cm, preferably less than 10 µS/cm, more preferably less than 5 µS/cm, most preferably less than 2 µS/cm when employed as the sole additive at a concentration of 0.0002-0.5 wt.% N-vinylpyrrolidone polymer in a base fluid consisting of 30-60 wt.% MEG in water, wherein the electrical conductivity is determined after aging the heat-transfer fluid at 90°C for 14 days, such as in the presence of aluminum substrates (EN AC-AlSi10Mg(a)T6, DIN EN 1706) using the test procedure as described in the experimental section.

### Electrical conductivity

In embodiments of the invention, a coolant composition as described herein is provided which has the electrical conductivity described herein elsewhere, as measured in accordance with ASTM D1125 with a Radiometer Copenhagen CDM210 electrical conductivity meter using a Radiometer Copenhagen CDC745-Conductivity cell and a Radiometer Copenhagen Temperature sensor T201.

In embodiments of the invention, a coolant composition as described herein is provided which has an electrical conductivity at 25°C after aging for 14 days at 90 °C, optionally in the presence of aluminium (EN AC-AlSi10Mg(a)T6, DIN EN 1706) using the test procedure as described in the experimental section, of less than 50 µS/cm, preferably less than 25 µS/cm, preferably less than 10 µS/cm, more preferably less than 5 µS/cm, even more preferably less than 2 µS/cm.

In embodiments of the invention, a coolant composition as described herein is provided wherein, after aging for 14 days at 90 °C, optionally in the presence of aluminium (EN AC-AlSi10Mg(a)T6, DIN EN 1706) using the test procedure as described in the experimental section, the concentration of glycolate and/or the concentration of formate is less than 30 ppm, preferably less than 10 ppm, more preferably less than 5 ppm, wherein the concentration of glycolate and the concentration of formate is determined by ion-chromatography.

### Corrosion inhibition

As explained throughout this document, the coolant compositions in accordance with the invention exhibit the electrical conductivity characteristics described herein while not significantly corroding aluminium. Hence, in embodiments of the invention, a composition as described herein is provided wherein an aluminium coupon (EN AC-AlSi10Mg(a)T6, DIN EN 1706) submerged in the composition exhibits a weight loss of less than 20 mg, preferably less than 10 mg, preferably less than 2 mg when tested using the procedure described in the experimental section.

### Inorganic compounds

In accordance with the invention the compositions as described herein may comprise inorganic compounds. If present, the (combined) amount of inorganic compounds is less than 100 ppm by total weight of the coolant composition. As will be understood by the skilled person, the inorganic compounds, do not comprise carbon-hydrogen bonds. In contrast organic compounds, such as organic anticorrosive agents that may be employed in the compositions according to the invention, do comprise carbon-hydrogen bonds..

As will be understood by the skilled person, high concentrations of inorganic compounds, particularly inorganic compounds in salt form, may increase the electrical conductivity of the coolant compositions, which would render them unsuitable for use in a fuel cell as it leads to a reduced voltage of the fuel cell and corrosion of separator plates. Hence, the coolant compositions as described herein typically have a reduced electrical conductivity when the amount of inorganic compounds is less than 100 ppm by total weight of the composition, preferably less than 75 ppm, more preferably less than 50 ppm, even more preferably less than 25 ppm, the most preferably less than 10 ppm.

In particular embodiments of the invention, the coolant composition as defined herein may comprise some inorganic anticorrosive agent, e.g. in an amount of more than 1 ppm by total weight of the composition, more than 3 ppm, or more than 5 ppm, provided that the electrical conductivity of the composition at 25 °C is less than 100 µS/cm.

In embodiments of the invention, the coolant composition as defined herein comprises inorganic anticorrosive agents selected from the group consisting of silicates, molybdates, nitrates, nitrites, borates, tungstates, sulphates, sulphites, carbonates, phosphonates, selenates and phosphates.

In a preferred embodiment, the coolant composition as defined herein does not comprise borax, sodium nitrate, sodium nitrite, sodium silicate and sodium benzoate.

In a preferred embodiment, the coolant composition as defined herein does not comprise carbon black.

In a preferred embodiment, the coolant composition as defined herein does not comprise borate and cerium nitrate.

In a preferred embodiment, the coolant composition as defined herein does not comprise water soluble molybdates, nitrites and nitrates.

In a preferred embodiment, the coolant composition as defined herein does not comprise potassium hydroxide.

### Further additives

As will be understood by the skilled person, based on teachings presented herein, the coolant compositions in accordance with the invention may comprise one or more further additives, as is conventional in the art. It is within the routine capabilities of one of ordinary skill in the art to determine how much of a certain additive can be added such that the electrical conductivity of the resulting composition is in accordance with the invention. As will be appreciated by those skilled in the art, non-ionic further additives are preferred. The coolant composition comprises well-defined amounts of water, alcohol, N-vinylpyrrolidone polymer and inorganic compounds. Accordingly, the one or more further additives are different from water, alcohol and N-vinylpyrrolidone polymer and inorganic compounds.

In certain embodiments of the invention the composition provided herein, comprises one or more further additives, preferably one or more further additives selected from the group consisting of corrosion inhibitors, liquid dielectrics, antioxidants, anti-wear agents, detergents and antifoam agents. In preferred embodiments the composition of the invention further comprises one or more of said further additives in an amount within the range of 0.001-10 wt.% (by total weight of the composition), preferably 0.01-5 wt.%, more preferably 0.02-3 wt.%

In preferred embodiments the coolant composition of the invention further comprises one or more further additives selected from the group consisting of thiazoles, triazoles, polyolefins, polyalkylene oxides, silicon oils, silicate esters (such as Si(OR)₄, wherein R is a C₁ to C₄ alkyl group), mineral oils, monocarboxylic acids, dicarboxylic acids and tricarboxylic acids. In preferred embodiments the coolant composition of the invention further comprises one or more of said additives in an amount within the range of 0.001-10 wt.% (by total weight of the composition), preferably 0.01-5 wt.%, more preferably 0.02-3 wt.%.

In preferred embodiments of the invention, a coolant composition as defined herein is provided, wherein the composition comprises as a further additive a corrosion inhibitor which is a thiazole or a triazole, preferably an aromatic triazole or thiazole. In preferred embodiments of the invention, a coolant composition as defined herein is provided, wherein the composition comprises as further additive(s) one or more triazoles selected from the group consisting of tolyltriazole, benzotriazole and combinations thereof.

In embodiments of the invention, a coolant composition as defined herein is provided, wherein the composition comprises as a further additive a triazole or a thiazole, preferably tolyltriazole or benzotriazole in an amount of more than 0.001 wt.% (by total weight of the composition), preferably more than 0.01 wt.%, preferably more than 0.1 wt.% and/or less than 10 wt.%, preferably less than 5 wt.%, preferably less than 3 wt.%.

In embodiments of the invention, a composition as defined herein is provided, wherein the composition comprises as a further additive a defoaming agent. Preferably, the defoaming agent is selected from the group consisting of a polyalkylene oxide, a silicon polymer (such as a 3D silicon polymer) or a silicon oil.

In embodiments of the invention, a coolant composition as defined herein is provided, wherein the composition comprises as a further additive the defoaming agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a coolant composition as defined herein is provided, wherein the composition comprises as a further additive a corrosion inhibitor selected from the group consisting of aromatic carboxylates, aliphatic monocarboxylates, aliphatic dicarboxylates, aliphatic tricarboxylates and polymeric corrosion inhibitors.

In embodiments of the invention, a coolant composition as defined herein is provided, wherein the composition comprises as a further additive an aliphatic monocarboxylate, preferably an aliphatic monocarboxylate selected from the group consisting of C₄-C₁₂ aliphatic monocarboxylates in an amount of more than 50 ppm (by total weight of the composition), preferably more than 100 ppm, preferably more than 500 ppm and/or less than 5000 ppm, preferably less than 2500 ppm, preferably less than 1000 ppm.

In embodiments of the invention, a coolant composition as defined herein is provided, wherein the composition comprises as a further additive an aliphatic dicarboxylate, preferably an aliphatic dicarboxylate selected from the group consisting of C₆-C₁₆ aliphatic dicarboxylates, in an amount of more than 50 ppm (by total weight of the composition), preferably more than 100 ppm, preferably more than 500 ppm and/or less than 5000 ppm, preferably less than 2500 ppm, preferably less than 1000 ppm.

In embodiments of the invention, a coolant composition as defined herein is provided, wherein the composition comprises as a further additive an aliphatic tricarboxylate, preferably an aliphatic tricarboxylate selected from the group consisting of C₇-C₁₈ aliphatic tricarboxylates, in an amount of more than 50 ppm (by total weight of the composition), preferably more than 100 ppm, preferably more than 500 ppm and/or less than 5000 ppm, preferably less than 2500 ppm, preferably less than 1000 ppm.

In embodiments of the invention, a coolant composition as defined herein is provided, wherein the composition comprises as a further additive an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4-dicarboxylate and combinations thereof, in an amount of more than 50 ppm (by total weight of the composition), preferably more than 100 ppm, preferably more than 500 ppm and/or less than 5000 ppm, preferably less than 2500 ppm, preferably less than 1000 ppm.

In embodiments of the invention, a coolant composition as defined herein is provided, wherein the composition comprises as a further additive an antioxidant. Preferably, the antioxidant is selected from the group consisting of phenols, such as 2,6 di-t-butyl methylphenol and 4,4'-methylene-bis(2,6-di-t-butylphenol); aromatic amines, such as *p*,*p*-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines, as well as sulphur containing compounds.

In embodiments of the invention, a coolant composition as defined herein is provided, wherein the composition comprises as a further additive an antioxidant in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a coolant composition as defined herein is provided, wherein the composition comprises as a further additive an antiwear agent.

In embodiments of the invention, a coolant composition as defined herein is provided, wherein the composition comprises as a further additive the antiwear agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a coolant composition as defined herein is provided, wherein the composition comprises as further additive(s) one or more surfactants. In a preferred embodiment, the one or more surfactants are selected from the group consisting of non-ionic surfactants, such as one or more non-ionic surfactants selected from the group consisting of:
- fatty acid esters, such as sorbitan fatty acid esters;
- polyalkylene glycols;
- polyalkylene glycol esters;
- copolymers and block copolymers of ethylene oxide and propylene oxide;
- polyoxyalkylene derivatives of sorbitan fatty acid esters; and
- alkoxylated alcohol ethers.

In embodiments of the invention, a coolant composition as defined herein is provided, wherein the composition comprises said one or more surfactants in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In certain embodiments of the invention, a coolant composition as defined herein is provided, wherein the composition comprises as a further additive a dielectric liquid. Preferred dielectric liquids are minerals oils, silicon oils and mixtures thereof.

In certain embodiments of the invention the coolant composition provided herein comprises more than 0.0001 wt.% (by total weight of the composition) of the dielectric liquid preferably more than 0.001 wt.%, preferably more than 0.01 wt.% and/or less than 10 wt.%, preferably less than 5 wt.%, preferably less than 3 wt.%.

In certain embodiments of the invention the coolant composition provided herein comprises 0.0001-10 wt.% (by total weight of the composition) of the dielectric liquid, preferably 0.001-5 wt.%, preferably 0.01-1 wt.%.

In certain embodiments of the invention, a coolant composition as defined herein is provided, wherein the composition comprises as a further additive one or more non-ionic dyes, such as the non-ionic dyes as disclosed in EP1809718B1 and in KR102108349B1, preferably in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In certain embodiments of the invention, a coolant composition as defined herein is provided, wherein the composition comprises, for safety reasons, as a further additive one or more bitterants, preferably in an amount of less than 100 ppm (by total weight of the composition), preferably less than 80 ppm, less than 60 ppm, less than 40 ppm, or less than 20 ppm.

In certain embodiments of the invention, a coolant composition as defined herein is provided, wherein the composition comprises as a further additive one or more polymeric viscosity modifiers, such as homopolymers of ethylene oxide, random copolymers of ethylene oxide and propylene oxide, 80% hydrolysed polyvinylalcohol, polyalkoxy grafted polyvinylalcohol and poly(vinylalcohol-co-ethylene), preferably in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

### Composition as a heat-transfer fluid

In highly preferred embodiments, the coolant composition, preferably the ready-to-use coolant composition as described herein is a heat-transfer fluid, preferably a heat-transfer fluid suitable for use in a solar system, a fuel cell, an electrical motor, a generator, a battery, a battery electric vehicle, power electronics or electronic equipment, most preferably a heat-transfer fluid suitable for use in a fuel cell or power electronics.

As will be understood by the skilled person, depending on (for example) the intended application, the compositions in accordance with the invention may be formulated and used at various concentrations. Hence, the coolant composition is not particularly limited by the concentration of N-vinylpyrrolidone polymer, preferably the polyvinylpyrrolidone or other additives described herein. Thus, depending on the envisaged application, the compositions described herein may be suitable for use as is, or may require dilution by base fluid before use. However, the present inventors have found that it is particularly advantageous to provide the compositions of the invention in the form of a ready-to-use composition which may be suitable for use as a fuel cell coolant or in the form of a concentrate which is suitable to prepare said ready-to-use composition.

### Ready-to-use composition

In a highly preferred embodiment of the invention, the coolant composition as described herein is provided in the form of a ready to-use composition which is a heat-transfer fluid wherein:
- the concentration of the N-vinylpyrrolidone polymer, preferably the polyvinylpyrrolidone is within the range of 0.0001-10 wt.% by total weight of the composition, preferably within the range of 0.00015-5 wt.%, more preferably within the range of 0.0002-2 wt.%; and
- the composition comprises more than 90 wt.% by total weight of the composition, preferably more than 95 wt.%, preferably more than 98 wt.%, preferably more than 99 wt.% base fluid.

In embodiments of the invention, the ready-to-use composition provided herein comprises N-vinylpyrrolidone polymer, preferably polyvinylpyrrolidone, having a weight average molecular weight in the range of 500 to 2,500,000 g/mol, preferably in the range of 3,000 to 2,500,000 g/mol, more preferably in the range of 5,000 to 2,250,000 g/mol, even more preferably in the range of 7,500 to 2,00,000 g/mol, most preferably in the range of 8,000 to 1,800,000 g/mol; wherein the N-vinylpyrrolidone polymer has a concentration within the range of 0.0001-10 wt.% by total weight of the composition, preferably within the range of 0.00015-5 wt.%, more preferably within the range of 0.0002-3 wt.%. In particular preferred embodiments, said N-vinylpyrrolidone polymer, preferably polyvinylpyrrolidone has a concentration in the ready-to-use composition of more than 0.0001 wt.%, more than 0.0002 wt.%, more than 0.0003 wt.%, more than 0.0005 wt.%, more than 0.001 wt.%, more than 0.002 wt.%, more than 0.003 wt.%, more than 0.005 wt.%, more than 0.01 wt.%, more than 0.02 wt.%, more than 0.03 wt.%, more than 0.05 wt.% more than 0.1 w.t%, more than 0.2 wt.% and/or less than 10 wt.%, less than 9 wt.%, less than 8 wt.%, less than 7 wt.%, less than 6 wt.%, less than 5 wt.%, less than 4 wt.%, less than 3 wt.%, less than 2 wt.%, less than 1 wt.%, less than 0.9 wt.%, less than 0.8 wt.%, less than 0.7 wt.%, less than 0.6 wt.%, less than 0.5 wt.%, less than 0.4 wt.%. In highly preferred embodiments, said polyvinylpyrrolidone has a concentration in the ready-to-use composition of more than 0.0001 wt.%, preferably more than 0.00015 wt.%, more preferably more than 0.0002 wt.% and/or less than 10 wt.%, preferably less than 5 wt.%, more preferably less than 2 wt.%.

In particular embodiments of the invention, the ready-to-use composition provided herein comprises N-vinylpyrrolidone polymer, preferably polyvinylpyrrolidone, having a weight average molecular weight in in the range of 3,000 to 700,000 g/mol, preferably in the range of 5,000 to 500,000 g/mol, more preferably in the range of 7,500 to 250,000 g/mol, even more preferably in the range of 8,000 to 100,000 g/mol; wherein the N-vinylpyrrolidone polymer has a concentration within the range of 0.0001-10 wt.% by total weight of the composition, preferably within the range of 0.00015-5 wt.%, more preferably within the range of 0.0002-3 wt.%. In particular preferred embodiments, said N-vinylpyrrolidone polymer, preferably polyvinylpyrrolidone, has a concentration in the ready-to-use composition of more than 0.0001 wt.%, more than 0.0002 wt.%, more than 0.0003 wt.%, more than 0.0005 wt.%, more than 0.001 wt.%, more than 0.002 wt.%, more than 0.003 wt.%, more than 0.005 wt.%, more than 0.01 wt.%, more than 0.02 wt.%, more than 0.03 wt.%, more than 0.05 wt.% more than 0.1 w.t%, more than 0.2 wt.% and/or less than 10 wt.%, less than 9 wt.%, less than 8 wt.%, less than 7 wt.%, less than 6 wt.%, less than 5 wt.%, less than 4 wt.%, less than 3 wt.%, less than 2 wt.%, less than 1 wt.%, less than 0.9 wt.%, less than 0.8 wt.%, less than 0.7 wt.%, less than 0.6 wt.%, less than 0.5 wt.%, less than 0.4 wt.%. In highly preferred embodiments, said N-vinylpyrrolidone polymer, preferably polyvinylpyrrolidone, has a concentration in the ready-to-use composition of more than 0.0001 wt.%, preferably more than 0.00015 wt.%, more preferably more than 0.0002 wt.% and/or less than 10 wt.%, preferably less than 5 wt.%, more preferably less than 2 wt.%.

In particular embodiments of the invention, the ready-to-use composition provided herein comprises N-vinylpyrrolidone polymer, preferably polyvinylpyrrolidone, having a weight average molecular weight in in the range of 700,000 to 2,500,000 g/mol, preferably in the range of 750,000 to 2,250,000 g/mol, more preferably in the range of 850,000 to 2,000,000 g/mol, even more preferably in the range of 1,000,000 to 1,800,000 g/mol; wherein the N-vinylpyrrolidone polymer has a concentration within the range of 0.0001-10 wt.% by total weight of the composition, preferably within the range of 0.00015-5 wt.%, more preferably within the range of 0.0002-3 wt.%. In particular preferred embodiments, said N-vinylpyrrolidone polymer, preferably polyvinylpyrrolidone, has a concentration in the ready-to-use composition of more than 0.0001 wt.%, more than 0.0002 wt.%, more than 0.0003 wt.%, more than 0.0005 wt.%, more than 0.001 wt.%, more than 0.002 wt.%, more than 0.003 wt.%, more than 0.005 wt.%, more than 0.01 wt.%, more than 0.02 wt.%, more than 0.03 wt.%, more than 0.05 wt.% more than 0.1 w.t%, more than 0.2 wt.% and/or less than 10 wt.%, less than 9 wt.%, less than 8 wt.%, less than 7 wt.%, less than 6 wt.%, less than 5 wt.%, less than 4 wt.%, less than 3 wt.%, less than 2 wt.%, less than 1 wt.%, less than 0.9 wt.%, less than 0.8 wt.%, less than 0.7 wt.%, less than 0.6 wt.%, less than 0.5 wt.%, less than 0.4 wt.%. In highly preferred embodiments said N-vinylpyrrolidone polymer, preferably polyvinylpyrrolidone, has a concentration in the ready-to-use composition of more than 0.0001 wt.%, preferably more than 0.00015 wt.%, more preferably more than 0.0002 w

In particular embodiments of the invention, the ready-to-use composition provided herein comprises N-vinylpyrrolidone polymer, preferably polyvinylpyrrolidone, having a weight average molecular weight of 500 to 50,000 g/mol, more preferably 1,000 to 15,000 g/mol, even more preferably 1,500 to 10,000 g/mol; wherein the N-vinylpyrrolidone polymer has a concentration within the range of 0.0001-10 wt.% by total weight of the composition, preferably within the range of 0.00015-5 wt.%, more preferably within the range of 0.0002-3 wt.%. In particular preferred embodiments, said N-vinylpyrrolidone polymer, preferably polyvinylpyrrolidone, has a concentration in the ready-to-use composition of more than 0.0001 wt.%, more than 0.0002 wt.%, more than 0.0003 wt.%, more than 0.0005 wt.%, more than 0.001 wt.%, more than 0.002 wt.%, more than 0.003 wt.%, more than 0.005 wt.%, more than 0.01 wt.%, more than 0.02 wt.%, more than 0.03 wt.%, more than 0.05 wt.% more than 0.1 w.t%, more than 0.2 wt.% and/or less than 10 wt.%, less than 9 wt.%, less than 8 wt.%, less than 7 wt.%, less than 6 wt.%, less than 5 wt.%, less than 4 wt.%, less than 3 wt.%, less than 2 wt.%, less than 1 wt.%, less than 0.9 wt.%, less than 0.8 wt.%, less than 0.7 wt.%, less than 0.6 wt.%, less than 0.5 wt.%, less than 0.4 wt.%. In highly preferred embodiments said N-vinylpyrrolidone polymer, preferably polyvinylpyrrolidone, has a concentration in the ready-to-use composition of more than 0.0001 wt.%, preferably more than 0.00015 wt.%, more preferably more than 0.0002 wt.% and/or less than 10 wt.%, preferably less than 5 wt.%, more preferably less than 2 wt.%.

In preferred embodiments, the ready-to-use composition as described herein is provided wherein the base fluid consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol glycerol and mixtures thereof, preferably selected from the group consisting of monoethylene glycol, monopropylene glycol, 1,3-propanediol, glycerol and mixtures thereof; and wherein the amount of the alcohol is in the range of 10-80 wt.% (by total weight of the composition), preferably 30-70 wt.%. In particular embodiments the amount of the alcohol is in the range of 10-45 wt.% (by total weight of the composition).

In highly preferred embodiments, the ready-to-use composition has an electrical conductivity at 25 °C of less than 100 µS/cm, preferably less than 50 µS/cm, more preferably less than 25 µS/cm, even more preferably less than 10 µS/cm, yet more preferably less than 5 µS/cm, most preferably less than 2 µS/cm, wherein the electrical conductivity is determined after aging the heat-transfer fluid at 90°C for 14 days, optionally in the presence of aluminum substrates (EN AC-AlSi10Mg(a)T6, DIN EN 1706) using the test procedure as described in the experimental section.

In preferred embodiments the ready-to-use composition has a kinematic viscosity, determined according to ASTM standard test method D445-19a, at 20 °C, in the range of 0.1 and 100 mm²/s, preferably in the range of 0.5 and 50 mm²/s, more preferably in the range of 1 and 10 mm²/s.

### Concentrate

In a preferred embodiment of the invention, the composition as described herein is provided in the form of a concentrate suitable to prepare the ready-to-use composition described herein.

In a preferred embodiment, the concentrate is suitable to prepare the ready-to-use composition described herein by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the ready-to-use composition solely by addition of water and/or alcohol; preferably solely by addition of water, monoethylene glycol, monopropylene glycol, 1,3-propanediol and/or glycerol; most preferably solely by addition of water (i.e. no other ingredients need to be added in order to prepare the ready-to-use composition described herein from the concentrate).

In embodiments of the invention the concentrate as defined herein is provided wherein the concentration of the N-vinylpyrrolidone polymer, preferably polyvinylpyrrolidone, is more than 0.01 wt.% (by total weight of the composition), preferably more than 0.05 wt.%, more preferably more than 0.5 wt.% and/or less than 10 wt.%, preferably less than 5 wt.%, more preferably less than 2 wt.%.

In preferred embodiments the concentrate as defined herein is provided, wherein the concentration of the N-vinylpyrrolidone polymer, preferably polyvinylpyrrolidone, is within the range of 0.01-10 wt.% (by total weight of the composition), preferably 0.05-5 wt.%, more preferably 0.1-2 wt.%.

In preferred embodiments, the concentrate comprises a base fluid as defined herein and N-vinylpyrrolidone polymer, preferably polyvinylpyrrolidone, as defined herein wherein the concentration of the N-vinylpyrrolidone polymer, is more than 0.01 wt.% (by total weight of the composition), preferably more than 0.1 wt.%, more preferably more than 0.5 wt.% and wherein more than 80 wt.%, preferably more than 85 wt.%, preferably more than 90 wt.% of the concentrate is an alcohol, preferably an alcohol selected from the group consisting of monoethylene glycol, monopropylene glycol, 1,3-propanediol and glycerol, most preferably monoethylene glycol.

In preferred embodiments, the concentrate comprises a base fluid as defined herein and an N-vinylpyrrolidone polymer, preferably a polyvinylpyrrolidone, as defined herein wherein the concentration of the N-vinylpyrrolidone polymer is more than 0.01 wt.% (by total weight of the composition), preferably more than 0.1 wt.%, more preferably more than 0.5 wt.% and wherein more than 80 wt.%, preferably more than 85 wt.% of the concentrate is water.

### Other

In accordance with the invention the alcohol of step (ii) is preferably selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, preferably selected from the group consisting of monoethylene glycol, monopropylene glycol, 1,3-propanediol,glycerol and mixtures thereof; preferably from the group consisting of monoethylene glycol, monopropylene glycol, 1,3-propanediol and mixtures thereof.

In embodiments of the invention, the coolant composition, preferably the ready-to-use composition, as defined herein has a pH between 3 and 8, preferably between 3.5 and 7.5, more preferably between 4 and 7.

In embodiments of the invention, the coolant composition, preferably the ready-to-use composition, as defined herein has a weight ratio of N-vinylpyrrolidone polymer, preferably polyvinylpyrrolidone, to the alcohol comprised in the base fluid of less than 0.01, preferably less than 0.001, most preferably less than 0.0001.

### Uses/methods

In another aspect, the invention provides the use of the N-vinylpyrrolidone polymer, preferably the polyvinylpyrrolidione, as defined herein:
- for inhibiting the formation of glycolate or formate ions in an alcohol and water based coolant.

In another aspect of the invention there is provided the use of the coolant composition, preferably the ready-to-use composition, described herein as a heat-transfer fluid or coolant, preferably as a heat-transfer fluid or coolant in an electrical system, more preferably as a heat-transfer fluid or coolant in an electrical system selected from the group consisting of a solar system, a fuel cell, an electrical motor, a generator, a battery, a telephone transmission station, power electronics, a radio and television broadcast station, a relay station, an electrical heating or cooling device, preferably a fuel cell or power electronics.

### Examples

The surprising behaviour of coolant compositions in accordance with the invention, and specifically the electrical conductivity upon ageing, even in the presence of aluminium, was demonstrated by immersion of an aluminum specimen in various compositions according to the invention or in comparative compositions, and ageing the composition for 14 days at 90 °C as described hereunder.

Fourteen compositions (examples 2-15) were prepared by adding various amounts of polyvinylpyrrolidone (Luvitec K17: M_{w} = 9,000 g/mol, Luvitec K30a: M_{w} = 40,000 g/mol, Luvitec K30b: M_{w} = 50,000 g/mol and Luvitec K90: M_{w} = 1,400,000 g/mol) to a composition of 33 vol% MEG in UPW (ultrapure water).

Example 1 is a blank composition consisting of 33 vol% MEG in UPW, i.e. no polyvinylpyrrolidone.

The prepared compositions of examples 1-15 were treated with DOWEX Marathon MR3 (now Amberlite MB20 HOH), *i.e.* a mixed-bed ion-exchange resin, to remove all residual ionic compounds in the prepared compositions. For this purpose, the compositions were stirred for 3 h with 0.5 w% DOWEX Marathon MR3 (now Amberlite MB20 HOH) at room temperature. The ion exchanger was removed by filtration after 3 h.

The pH and the electrical conductivity (eConduc) of the thus treated compositions were measured (measurement 'before ageing') and are listed in the tables below. Subsequently, 100 mL glass bottles were rinsed with UPW and dried overnight at 90 °C. Aluminium (EN AC-AlSi10Mg(a)T6, DIN EN 1706) coupons were polished using P240 sanding paper, rinsed with UPW and acetone, dried for 1 h at 100 °C and weighed (Coupon Fresh). The coupons were added to the bottles and to the bottles was added 100 mL of the compositions of examples 1-15. Subsequently, the bottles were placed in an oven at 90 °C. After 14 days, the bottles were taken out of the oven and the electrical conductivity and pH of the aged compositions was measured. The glycolate and formate concentration in the aged compositions were determined by ion chromatography. All coupons were gently cleaned with water and a soft bristle brush, dried and weighed (coupon AT). Finally, all coupons were chemically cleaned by placing them in a mixture of HNO₃:UPW 4:1 for 10 min. The coupons were further cleaned with water and a soft bristle brush, 5 dried at 100 °C for 1 h and weighed (coupon CC). The change in weight of the aluminium coupons due to aging was determined using the following formula: Δm (mg) = Mass Coupon Fresh (mg) - Mass Coupon CC (mg) -. Experimental results are provided in Table 1.

**Table 1:**

| | | | *Before aging* | | *After aging* | | | | |
|---|---|---|---|---|---|---|---|---|---|
| | | wt.% ^{@} | pH | eCond. (µS/cm) | pH | eCond. (µS/cm) | Glycolate (ppm) | Formate (ppm) | Δm^{#} (mg) |
| 1 | Blank | / | 6.0 | 0.72 | 3.8 | 22.5 | 12 | 12 | -1.9 |
| 2 | Luvitec K17 | 0.30 | 7.2 | 0.48 | 4.4 | 9.3 | 4 | 3 | -3.0 |
| 3 | Luvitec K17 | 0.10 | 7.0 | 0.51 | 5.1 | 5.1 | 4 | 1 | -2.5 |
| 4 | Luvitec K17 | 0.02 | 6.0 | 0.51 | 5.2 | 4.3 | 2 | 1 | -3.2 |
| 5 | Luvitec K17 | 0.002 | 6.2 | 0.50 | 4.6 | 2.9 | 3 | 1 | -2.7 |
| 6 | Luvitec K17 | 0.0002 | 5.1 | 0.44 | 4.4 | 8.1 | 3 | 2 | -2.7 |
| 7 | Luvitec K30a | 0.30 | 5.6 | 1.08 | 4.5 | 6.5 | 4 | 3 | -2.1 |
| 8 | Luvitec K30b | 0.30 | 5.1 | 1.36 | 4.0 | 13.0 | 11 | 5 | -2.5 |
| 9 | Luvitec K90 | 0.30 | 5.7 | 0.38 | 4.3 | 8.2 | 3 | 2 | -2.9 |
| 1 0 | Luvitec K90 | 0.20 | 5.7 | 2.60 | 5.1 | 2.5 | 4 | 0 | -1.9 |
| 1 1 | Luvitec K90 | 0.10 | 5.7 | 1.30 | 5.6 | 2.1 | 4 | 0 | -2.1 |
| 1 2 | Luvitec K90 | 0.044 | 6.3 | 0.60 | 5.4 | 2.4 | 3 | 1 | -1.5 |
| 1 3 | Luvitec K90 | 0.02 | 6.2 | 0.44 | 3.8 | 5.5 | 2 | 1 | -2.8 |
| 1 4 | Luvitec K90 | 0.002 | 6.7 | 0.51 | 5.7 | 2.9 | 2 | 0 | -2.7 |
| 1 5 | Luvitec K90 | 0.0002 | 5.2 | 0.41 | 5.1 | 2.6 | 2 | 1 | -2.7 |

| | | | | | | | | | |
|---|---|---|---|---|---|---|---|---|---|
| ^{@}wt.% are calculated based on the total weight of the composition ^{#} a negative sign indicates weight gain | | | | | | | | | |

As can been seen from the above results, the compositions according to the invention using polyvinylpyrrolidione (examples 2-15) surprisingly and unexpectedly show a low electrical conductivity and very limited glycol breakdown upon ageing in the presence of aluminium.

## Claims

1. A coolant composition comprising a base fluid and N-vinylpyrrolidone polymer, preferably polyvinylpyrrolidone, wherein the composition has an electrical conductivity at 25 °C of less than 100 µS/cm,
wherein the base fluid consists of water and alcohol,
wherein the alcohol is present in an amount in the range of 10-99.5 wt.% by weight of the base fluid,
wherein the composition comprises more than 75 wt.% base fluid by total weight of the composition, and
wherein the amount of inorganic compounds is less than 100 ppm by total weight of the composition.

2. The composition according to claim 1, wherein the composition has an electrical conductivity at 25 °C of less than 50 µS/cm, preferably less than 25 µS/cm, more preferably less than 10 µS/cm, even more preferably less than 5 µS/cm.

3. The composition according to claim 1 or 2, wherein the alcohol is selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6-hexanetriol, trimethylolpropane, methoxyethanol, glycerol and mixtures thereof, preferably selected from the group consisting of monoethylene glycol, monopropylene glycol, 1,3-propanediol, glycerol and mixtures thereof.

4. The composition according to any one of the preceding claims, wherein the alcohol is present in an amount in the range of 30-70 wt.% by weight of the base fluid.

5. The composition according to any one of the preceding claims, wherein the N-vinylpyrrolidone polymer, preferably the polyvinylpyrrolidone, has a weight average molecular weight in the range of 500 to 2,500,000 g/mol.

6. The composition according to claim 5, wherein the N-vinylpyrrolidone polymer, preferably the polyvinylpyrrolidone, has a weight average molecular weight in the range of 500 to 50,000 g/mol, more preferably in the range of 1,000 to 15,000 g/mol, even more preferably in the range of 1,500 to 10,000 g/mol, such as about 2000 g/mol, about 2500 g/mol, about 5000 g/mol or about 8000 g/mol.

7. The composition according to any one of the preceding claims, wherein the composition comprises one or more further additives selected from the group consisting of thiazoles, triazoles, polyolefins, polyalkylene oxides, silicon oils, mineral oils, silicate esters, aliphatic monocarboxylic acids, aliphatic dicarboxylic acids and aliphatic tricarboxylic acids.

8. The composition according to any of the preceding claims, wherein the amount of inorganic compounds is less than 50 ppm, preferably less than 25 ppm, more preferably less than 10 ppm.

9. The composition according to any one of claims 1-8 which is provided in the form of a ready-to-use composition which is a heat-transfer fluid wherein:
• the concentration of the N-vinylpyrrolidone polymer, preferably the polyvinylpyrrolidone, is within the range of 0.0001-10 wt.% by total weight of the composition, preferably within the range of 0.00015-5 wt.%, more preferably within the range of 0.0002-2 wt.%; and
• the composition comprises more than 90 wt.% by total weight of the composition, preferably more than 95 wt.%, preferably more than 98 wt.%, preferably more than 99 wt.% base fluid.

10. The composition according to any one of claims 1-9 having a pH between 3 and 8, more preferably between 3.5 and 7.5, most preferably between 4 and 7.

11. The composition according to claim 9 or 10, wherein the base fluid consists of water and an alcohol selected from the group consisting of monoethylene glycol, monopropylene glycol, 1,3-propanediol, glycerol and mixtures thereof, wherein the alcohol is present in an amount in the range of 30-70 wt.% by weight of the base fluid.

12. The composition according to any one of claims 9-11, having a kinematic viscosity at 20 °C, determined according to ASTM standard test method D445-19a, at 20 °C, in the range of 0.1 and 100 mm²/s, preferably in the range of 0.5 and 50 mm²/s, more preferably in the range of 1 and 10 mm²/s.

13. The composition according to any one of claims 1-8, which is provided in the form of a concentrate suitable to prepare the ready-to-use composition according to any one of claims 10-12 solely by addition of water and/or alcohol; preferably solely by addition of water, monoethylene glycol, monopropylene glycol, 1,3-propanediol and/or glycerol; most preferably solely by addition of water.

14. Use of an N-vinylpyrrolidone polymer, preferably polyvinylpyrrolidone for inhibiting the formation of glycolate or formate ions in an alcohol and water based coolant, preferably in a monoethylene glycol based coolant.

## Patentansprüche

1. Kühlmittelzusammensetzung, umfassend ein Basisfluid und *N*-Vinylpyrrolidonpolymer, bevorzugt Polyvinylpyrrolidon, wobei die Zusammensetzung eine elektrische Leitfähigkeit bei 25 °C von weniger als 100 µS/cm aufweist,
wobei das Basisfluid aus Wasser und Alkohol besteht,
wobei der Alkohol in einer Menge im Bereich von 10-99,5 Gew.-% bezogen auf das Gewicht des Basisfluids vorliegt,
wobei die Zusammensetzung mehr als 75 Gew.-% Basisfluid bezogen auf das Gesamtgewicht der Zusammensetzung umfasst und
wobei die Menge an anorganischen Verbindungen weniger als 100 ppm bezogen auf das Gesamtgewicht der Zusammensetzung beträgt.

2. Zusammensetzung gemäß Anspruch 1, wobei die Zusammensetzung eine elektrische Leitfähigkeit bei 25 °C von weniger als 50 µS/cm, bevorzugt weniger als 25 µS/cm, stärker bevorzugt weniger als 10 µS/cm, noch stärker bevorzugt weniger als 5 µS/cm aufweist.

3. Zusammensetzung gemäß Anspruch 1 oder 2, wobei der Alkohol ausgewählt ist aus der Gruppe bestehend aus Monoethylenglycol, Diethylenglycol, Triethylenglycol, Tetraethylenglycol, Pentaethylenglycol, Hexaethylenglycol, Monopropylenglycol, 1,3-Propandiol, Dipropylenglycol, Tripropylenglycol, Tetrapropylenglycol, Pentapropylenglycol, Hexapropylenglycol, Methanol, Ethanol, Propanol, Butanol, Tetrahydrofurfuryl, ethoxyliertem Furfuryl, Dimethylether von Glycerin, Sorbit, 1,2,6-Hexantriol, Trimethylolpropan, Methoxyethanol, Glycerin und Gemischen davon, bevorzugt ausgewählt aus der Gruppe bestehend aus Monoethylenglycol, Monopropylenglycol, 1,3-Propandiol, Glycerin und Gemischen davon.

4. Zusammensetzung gemäß einem der vorhergehenden Ansprüche, wobei der Alkohol in einer Menge im Bereich von 30-70 Gew.-% bezogen auf das Gewicht des Basisfluids vorliegt.

5. Zusammensetzung gemäß einem der vorhergehenden Ansprüche, wobei das *N-*Vinylpyrrolidonpolymer, bevorzugt das Polyvinylpyrrolidon, ein gewichtsmittleres Molekulargewicht im Bereich von 500 bis 2.500.000 g/mol aufweist.

6. Zusammensetzung gemäß Anspruch 5, wobei das *N*-Vinylpyrrolidonpolymer, bevorzugt das Polyvinylpyrrolidon, ein gewichtsmittleres Molekulargewicht im Bereich von 500 bis 50.000 g/mol, stärker bevorzugt im Bereich von 1.000 bis 15.000 g/mol, noch stärker bevorzugt im Bereich von 1.500 bis 10.000 g/mol, wie zum Beispiel etwa 2.000 g/mol, etwa 2.500 g/mol, etwa 5.000 g/mol oder etwa 8.000 g/mol aufweist.

7. Zusammensetzung gemäß einem der vorhergehenden Ansprüche, wobei die Zusammensetzung ein oder mehrere weitere Additive umfasst, ausgewählt aus der Gruppe bestehend aus Thiazolen, Triazolen, Polyolefinen, Polyalkylenoxiden, Siliconölen, Mineralölen, Silicatestern, aliphatischen Monocarbonsäuren, aliphatischen Dicarbonsäuren und aliphatischen Tricarbonsäuren.

8. Zusammensetzung gemäß beliebigen der vorhergehenden Ansprüche, wobei die Menge an anorganischen Verbindungen weniger als 50 ppm, bevorzugt weniger als 25 ppm, stärker bevorzugt weniger als 10 ppm beträgt.

9. Zusammensetzung gemäß einem der Ansprüche 1-8, die in der Form einer gebrauchsfertigen Zusammensetzung bereitgestellt ist, die ein Wärmeübertragungsfluid ist, wobei:
• die Konzentration des *N*-Vinylpyrrolidonpolymers, bevorzugt des Polyvinylpyrrolidons, innerhalb des Bereichs von 0,0001-10 Gew.-% bezogen auf das Gesamtgewicht der Zusammensetzung liegt, bevorzugt innerhalb des Bereichs von 0,00015-5 Gew.-%, stärker bevorzugt innerhalb des Bereichs von 0,0002-2 Gew.-%; und
• die Zusammensetzung mehr als 90 Gew.-% bezogen auf das Gesamtgewicht der Zusammensetzung, bevorzugt mehr als 95 Gew.-%, bevorzugt mehr als 98 Gew.-%, bevorzugt mehr als 99 Gew.-% Basisfluid umfasst.

10. Zusammensetzung gemäß einem der Ansprüche 1-9, die einen pH-Wert zwischen 3 und 8, stärker bevorzugt zwischen 3,5 und 7,5, am stärksten bevorzugt zwischen 4 und 7 aufweist.

11. Zusammensetzung gemäß Anspruch 9 oder 10, wobei das Basisfluid aus Wasser und einem Alkohol ausgewählt aus der Gruppe bestehend aus Monoethylenglycol, Monopropylenglycol, 1,3-Propandiol, Glycerin und Gemischen davon besteht, wobei der Alkohol in einer Menge im Bereich von 30-70 Gew.-% bezogen auf das Gewicht des Basisfluids vorliegt.

12. Zusammensetzung gemäß einem der Ansprüche 9-11, die eine kinematische Viskosität bei 20 °C, bestimmt gemäß dem ASTM-Standardtestverfahren D445-19a, bei 20 °C, im Bereich von 0,1 und 100 mm²/s, bevorzugt im Bereich von 0,5 und 50 mm²/s, stärker bevorzugt im Bereich von 1 und 10 mm²/s aufweist.

13. Zusammensetzung gemäß einem der Ansprüche 1-8, die in der Form eines Konzentrats bereitgestellt ist, das geeignet ist, um die gebrauchsfertige Zusammensetzung gemäß einem der Ansprüche 10-12 ausschließlich durch Zugabe von Wasser und/oder Alkohol herzustellen; bevorzugt ausschließlich durch Zugabe von Wasser, Monoethylenglycol, Monopropylenglycol, 1,3-Propandiol und/oder Glycerin; am stärksten bevorzugt ausschließlich durch Zugabe von Wasser.

14. Verwendung eines *N*-Vinylpyrrolidonpolymers, bevorzugt Polyvinylpyrrolidon, zum Hemmen der Bildung von Glycolat- oder Formiat-Ionen in einem Kühlmittel auf Alkohol- und Wasserbasis, bevorzugt in einem Kühlmittel auf Monoethylenglycolbasis.

## Revendications

1. Composition de liquide de refroidissement comprenant un fluide de base et un polymère de *N*-vinylpyrrolidone, de préférence de la polyvinylpyrrolidone, ladite composition ayant une conductivité électrique à 25 °C inférieure à 100 µS/cm,
ledit fluide de base étant constitué d'eau et d'alcool,
ledit alcool étant présent en une quantité comprise entre 10 et 99,5 % en poids du fluide de base,
ladite composition comprenant plus de 75 % en poids de fluide de base par rapport au poids total de la composition, et
dans laquelle la quantité de composés inorganiques est inférieure à 100 ppm en poids total de la composition.

2. Composition selon la revendication 1, ladite composition ayant une conductivité électrique à 25 °C inférieure 50 µS/cm, de préférence inférieure à 25 µS/cm, mieux encore inférieure à 10 µS/cm, idéalement inférieure à 5 µS/cm.

3. Composition selon la revendication 1 ou 2, dans laquelle l'alcool est choisi dans le groupe constitué de monoéthylène glycol, diéthylène glycol, triéthylène glycol, tétraéthylène glycol, pentaéthylène glycol, hexaéthylène glycol, monopropylène glycol, 1,3-propanediol, dipropylène glycol, tripropylène glycol, tétrapropylène glycol, pentapropylène glycol, hexapropylène glycol, méthanol, éthanol, propanol, butanol, tétrahydrofurfuryle, furfuryle éthoxylé, diméthyléther de glycérol, sorbitol, 1,2,6-hexanetriol, triméthylolpropane, méthoxyéthanol, glycérol et des mélanges de ceux-ci, de préférence choisi dans le groupe constitué de monoéthylène glycol, monopropylène glycol, 1,3-propanediol, glycérol et des mélanges de ceux-ci.

4. Composition selon l'une quelconque des revendications précédentes, dans laquelle l'alcool est présent en une quantité comprise entre 30 et 70 % en poids du fluide de base.

5. Composition selon l'une quelconque des revendications précédentes, dans laquelle le polymère de *N*-vinylpyrrolidone, de préférence la polyvinylpyrrolidone, a un poids moléculaire moyen en poids compris entre 500 et 2 500 000 g/mol.

6. Composition selon la revendication 5, dans laquelle le polymère de *N*-vinylpyrrolidone, de préférence la polyvinylpyrrolidone, a un poids moléculaire moyen en poids compris entre 500 et 50 000 g/mol, mieux encore compris entre 1 000 et 15 000 g/mol, idéalement compris entre 1 500 et 10 000 g/mol, tel qu'environ 2 000 g/mol, environ 2 500 g/mol, environ 5 000 g/mol ou environ 8 000 g/mol.

7. Composition selon l'une quelconque des revendications précédentes, ladite composition comprenant un ou plusieurs autres additifs choisis dans le groupe constitué des thiazoles, triazoles, polyoléfines, oxydes de polyalkylène, huiles de silicium, huiles minérales, esters de silicate, acides monocarboxyliques aliphatiques, acides dicarboxyliques aliphatiques et acides tricarboxyliques aliphatiques.

8. Composition selon l'une quelconque des revendications précédentes, dans laquelle la quantité de composés inorganiques est inférieure à 50 ppm, de préférence inférieure à 25 ppm, mieux encore inférieure à 10 ppm.

9. Composition selon l'une quelconque des revendications 1 à 8, se présentant sous la forme d'une composition prête à l'emploi qui est un fluide de transfert de chaleur, dans laquelle :
• la concentration du polymère de *N*-vinylpyrrolidone, de préférence la polyvinylpyrrolidone, est comprise entre 0,0001 et 10 % en poids par rapport au poids total de la composition, de préférence comprise entre 0,00015 et 5 % en poids, mieux encore comprise entre 0,0002 et 2 % en poids ; et
• la composition comprend plus de 90 % en poids par rapport au poids total de la composition, de préférence plus de 95 % en poids, de préférence plus de 98 % en poids, de préférence plus de 99 % en poids de fluide de base.

10. Composition selon l'une quelconque des revendications 1 à 9, ayant un pH compris entre 3 et 8, mieux encore compris entre 3,5 et 7,5, idéalement compris entre 4 et 7.

11. Composition selon la revendication 9 ou 10, dans laquelle le fluide de base est constitué d'eau et d'un alcool choisi dans le groupe constitué de monoéthylène glycol, monopropylène glycol, 1,3-propanediol, glycérol et de mélanges de ceux-ci, l'alcool étant présent en une quantité comprise entre 30 et 70 % en poids du fluide de base.

12. Composition selon l'une quelconque des revendications 9 à 11, ayant une viscosité cinématique à 20 °C, déterminée selon la méthode d'essai standard ASTM D445-19a, à 20 °C, comprise entre 0,1 et 100 mm²∕s, de préférence comprise entre 0,5 et 50 mm²∕s, mieux encore comprise entre 1 et 10 mm²∕s.

13. Composition selon l'une quelconque des revendications 1 à 8, se présentant sous la forme d'un concentré approprié pour préparer la composition prête à l'emploi selon l'une quelconque des revendications 10 à 12 uniquement par addition d'eau et/ou d'alcool ; de préférence uniquement par addition d'eau, de monoéthylène glycol, de monopropylène glycol, de 1,3-propanediol et/ou de glycérol ; idéalement uniquement par addition d'eau.

14. Utilisation d'un polymère de *N*-vinylpyrrolidone, de préférence de la polyvinylpyrrolidone, pour inhiber la formation d'ions glycolate ou formiate dans un liquide de refroidissement à base d'alcool et d'eau, de préférence dans un liquide de refroidissement à base de monoéthylène glycol.
